# EUROPEAN PATENT APPLICATION

(11) **EP 4 130 608 A1**
(43) Date of publication of application: **08.02.2023**
(21) Application number: 21781947.3
(22) Date of filing: 15.02.2021
(51) Int. Cl.: F25B 1/00, C09K 5/04

(54) **REFRIGERATION CYCLE WORKING MEDIUM AND REFRIGERATION CYCLE SYSTEM**

(30) Priority: 01.04.2020 JP 2020065871
(71) Applicant: Panasonic Intellectual Property Management Co., Ltd., Osaka-shi, Osaka 540-6207 (JP)
(72) Inventor: HASHIMOTO, Takahiko, Osaka-shi, Osaka 540-6207 (JP); NAKANO, Yukio, Koganei-shi, Tokyo 184-8501 (JP); KITAGAWA, Hirotaka, Osaka-shi, Osaka 540-6207 (JP)
(74) Representative: Eisenführ Speiser
(86) International application number: PCT/JP2021/005435
(87) International publication number: WO 2021/199725

(57) **Abstract**

The present invention includes, as a refrigerant component, a fluoroalkene that undergoes a disproportionation reaction, such as 1,1,2-trifluoroethylene, and difluoromethane, and as a disproportionation inhibitor that inhibits the disproportionation reaction of the fluoroalkene, at least difluoroiodomethane (CF₂HI). The present invention may further include, n-propane, may further include 1,1,1-trifluoro-2-iodoethane, or may further included trifluoroiodomethane (CF₃I) as the disproportionation inhibitor.

## Description

### TECHNICAL FIELD

The present invention relates to a working medium for a refrigeration cycle capable of effectively inhibiting or relaxing a disproportionation reaction of a fluoroalkene such as 1,1,2-trifluoroethylene, and a refrigeration cycle system including the working medium.

### BACKGROUND ART

As a working medium (refrigerant or heat medium) for a refrigeration cycle, a hydrochlorofluorocarbon (HCFC) was used before, but HCFC has a great influence on ozone depletion. Hydrofluorocarbons (HFCs) having zero ozone depletion potential (ODP) have been therefore used in recent years. Of such HFCs, the use of a hydrofluoroolefin (HFO) with a smaller global warming potential (GWP) has recently been proposed.

As a typical HFO, for example, 1, 1,2-trifluoroethylene (HFO1123) is known. 1,1,2-Trifluoroethylene has a lower stability than conventional HFCs and the like, hardly remains in the atmosphere, and therefore has small ODP and GWP. However, 1,1,2-trifluoroethylene is also known to undergo a self-polymerization reaction (hereinafter referred to as a disproportionation reaction) called a disproportionation reaction easily due to its low stability.

The disproportionation reaction is known to be easily induced by, for example, heat generation that is caused during use of a working medium for a refrigeration cycle and to be further made into a chain reaction due to large heat emission accompanied by the generation of the disproportionation reaction. As a result, a large amount of soot is generated, and the soot possibly lowers the reliability of the refrigeration cycle system or a compressor or the like constituting the system.

The present applicant has proposed a halomethane (PTL 1), a saturated hydrocarbon (PTL 2), a haloethane (PTL 3), or a combination thereof (PTL 4 or PTL 5) as a component (disproportionation inhibitor) for inhibiting the disproportionation reaction of 1,1,2-trifluoroethylene when 1,1,2-trifluoroethylene is used as a refrigerant component of a working medium for a refrigeration cycle. As a refrigerant component that can be used in combination with 1, 1,2-trifluoroethylene, difluoromethane (HFC32, R32) is also known (R32 is a refrigerant number based on Standard 34 of the American Society of Heating, Refrigerating and Air-Conditioning Engineers (ASHRAE)).

### Citation List

### Patent Literature

PTL 1: Unexamined Japanese Patent Publication No. 2017-145380
PTL 2: Unexamined Japanese Patent Publication No. 2018-048271
PTL 3: Unexamined Japanese Patent Publication No. 2018-104565
PTL 4: Unexamined Japanese Patent Publication No. 2018-104566
PTL 5: Unexamined Japanese Patent Publication No. 2019-034983

### SUMMARY OF THE INVENTION

### Technical problem

The disproportionation inhibitor described above can effectively inhibit or relax the disproportionation reaction of 1,1,2-trifluoroethylene. Even when difluoromethane is used in combination as a refrigerant component, the disproportionation inhibitor described above can effectively inhibit or relax the disproportionation reaction of 1,1,2-trifluoroethylene.

The inventors of the present invention have extensively conducted studies based on specific use conditions of a working medium for a refrigeration cycle containing 1,1,2-trifluoroethylene, and it has become clear that in an actual refrigeration cycle system, there is a possibility that 1, 1,2-trifluoroethylene is exposed to higher temperature and pressure conditions than expected.

For example, as described in PTL 5, the disproportionation inhibitor described above can inhibit or relax the disproportionation reaction effectively with the content of a haloalkane having 1 to 4 carbon atoms set within a predetermined range, even under a temperature condition of more than or equal to 150°C. However, it has been unclear about a working medium for a refrigeration cycle capable of effectively inhibiting or relaxing the disproportionation reaction not only under high temperature conditions but also under high pressure conditions.

The present invention has been made to solve such problems, and an object of the present invention is to provide a working medium for a refrigeration cycle capable of, when difluoromethane is used as a refrigerant component in combination with a fluoroalkene that undergoes a disproportionation reaction, such as 1,1,2-trifluoroethylene, more effectively inhibiting or relaxing the disproportionation reaction of the fluoroalkene even under a high temperature and high pressure condition, and a refrigeration cycle system including the working medium.

### Solution to problem

To solve the above problems, a working medium for a refrigeration cycle according to the present invention includes, as a refrigerant component, a fluoroalkene that undergoes a disproportionation reaction and difluoromethane, and as a disproportionation inhibitor that inhibits the disproportionation reaction of the fluoroalkene, at least difluoroiodomethane (CHF₂I).

In this configuration, at least difluoroiodomethane is added as a disproportionation inhibitor to the refrigerant component mainly composed of a fluoroalkene that undergoes a disproportionation reaction. In the disproportionation reaction of a fluoroalkene, a chain branching reaction is caused by radicals such as fluorine radical, fluoromethyl radical, and fluoromethylene radical. Difluoroiodomethane can favorably capture these radicals. It is therefore possible to effectively inhibit the disproportionation reaction of a fluoroalkene or to relax a rapid progress of the disproportionation reaction even under a high temperature and high pressure condition. As a result, it is possible to improve the reliability of the working medium for a refrigeration cycle and a refrigeration cycle system including the working medium.

The above-described object, other objects, features, and advantages of the present invention will become apparent from the following detailed description of preferred exemplary embodiments with reference to the accompanying drawings.

### Advantageous effect of invention

When difluoromethane is used as a refrigerant component in combination with a fluoroalkene that undergoes a disproportionation reaction such as 1,1,2-trifluoroethylene, the present invention, with the above configuration, can provide a working medium for a refrigeration cycle capable of more effectively inhibiting or relaxing the disproportionation reaction of the fluoroalkene even under a high temperature and high pressure condition, and a refrigeration cycle system including the working medium.

### BRIEF DESCRIPTION OF THE DRAWINGS

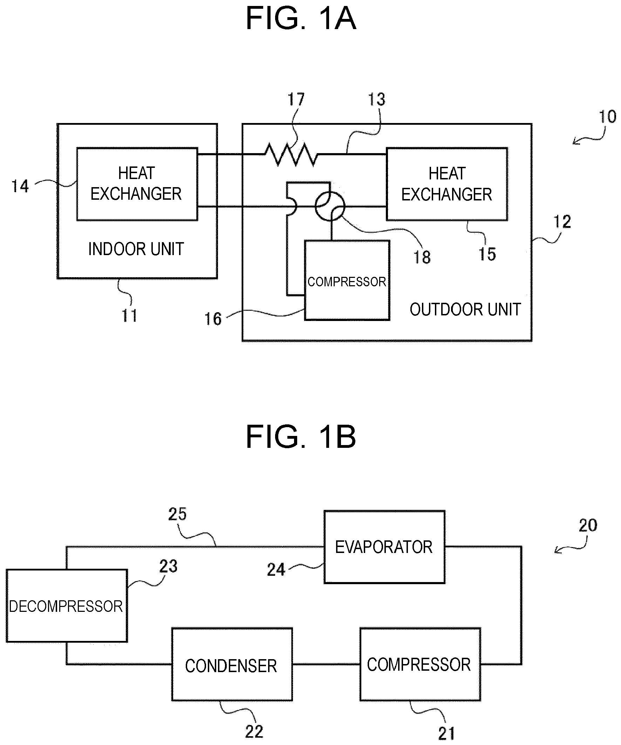

Figs. 1A and 1B are schematic block diagrams each illustrating an example of a refrigeration cycle system according to an exemplary embodiment of the present disclosure.

### DESCRIPTION OF EMBODIMENT

A working medium for a refrigeration cycle according to the present disclosure includes, as a refrigerant component, a fluoroalkene that undergoes a disproportionation reaction and difluoromethane, and as a disproportionation inhibitor that inhibits the disproportionation reaction of the fluoroalkene, at least difluoroiodomethane (CHF₂I).

In this configuration, at least difluoroiodomethane is added as a disproportionation inhibitor to the refrigerant component mainly composed of a fluoroalkene that undergoes a disproportionation reaction. In the disproportionation reaction of a fluoroalkene, a chain branching reaction is caused by radicals such as fluorine radical, fluoromethyl radical, and fluoromethylene radical. Difluoroiodomethane can favorably capture these radicals. It is therefore possible to effectively inhibit the disproportionation reaction of a fluoroalkene or to relax a rapid progress of the disproportionation reaction even under a high temperature and high pressure condition. As a result, it is possible to improve the reliability of the working medium for a refrigeration cycle and a refrigeration cycle system including the working medium.

In the working medium for a refrigeration cycle having the above-described configuration,
the fluoroalkene that undergoes the disproportionation reaction may be 1,1,2-trifluoroethylene.

In this configuration, at least difluoroiodomethane is added as the disproportionation inhibitor to the refrigerant component mainly composed of 1,1,2-trifluoroethylene (HFO1123). In the disproportionation reaction of 1,1,2-trifluoroethylene, a chain branching reaction is caused by radicals such as fluorine radical, fluoromethyl radical, and fluoromethylene radical. Difluoroiodomethane can favorably capture these radicals. It is therefore possible to effectively inhibit the disproportionation reaction of 1,1,2-trifluoroethylene or relax a rapid progress of the disproportionation reaction. As a result, it is possible to improve the reliability of the working medium for a refrigeration cycle and a refrigeration cycle system including the working medium.

In the working medium for a refrigeration cycle having the above-described configuration, the working medium may further include n-propane as the disproportionation inhibitor.

In this configuration, n-propane is used in combination with difluoroiodomethane as the disproportionation inhibitor. It is therefore possible to inhibit the disproportionation reaction or relax the progress of the disproportionation reaction more favorably even under a high temperature and high pressure condition.

In the working medium for a refrigeration cycle having the above-described configuration, the working medium may further include 1,1,1-trifluoro-2-iodoethane (CF₃CH₂I) or trifluoroiodomethane (CF₃I) as the disproportionation inhibitor.

In this configuration, 1,1,1-trifluoro-2-iodoethane or trifluoroiodomethane is used in combination with difluoroiodomethane as the disproportionation inhibitor. It is therefore possible to inhibit the disproportionation reaction or relax the progress of the disproportionation reaction more favorably even under a high temperature and high pressure condition.

In the working medium for a refrigeration cycle having the above-described configuration, a content of the difluoromethane in a total amount of the refrigerant component and the disproportionation inhibitor may be less than or equal to 30 mass%.

This configuration, in which the content of difluoromethane used in combination with 1,1,2-trifluoroethylene as the refrigerant component is less than or equal to the above upper limit value, can effectively inhibit the global warming potential (GWP) in the working medium for a refrigeration cycle from increasing.

In the working medium for a refrigeration cycle having the above-described configuration, a content of the difluoroiodomethane may be less than or equal to 15 mass% when a total amount of the refrigerant component and the disproportionation inhibitor is 100 mass%.

This configuration, in which the content of difluoroiodomethane as the disproportionation inhibitor is less than or equal to the above upper limit value, can inhibit the disproportionation reaction or relax the progress of the disproportionation reaction more favorably even under a high temperature and high pressure condition.

In the working medium for a refrigeration cycle having the above-described configuration, a content of the n-propane may be less than or equal to 10 mass% when a total amount of the refrigerant component and the disproportionation inhibitor is 100 mass%.

This configuration, in which the content of n-propane used in combination with difluoroiodomethane as the disproportionation inhibitor is less than or equal to the above upper limit value, can inhibit the disproportionation reaction or relax the progress of the disproportionation reaction more favorably even under a high temperature and high pressure condition.

The present disclosure further includes a refrigeration cycle system including the working medium for a refrigeration cycle having any one of the above-described configurations.

Hereinafter, a typical exemplary embodiment of the present disclosure is specifically described. The working medium for a refrigeration cycle according to the present disclosure includes, as a refrigerant component, (A) a fluoroalkene that undergoes a disproportionation reaction and (B) difluoromethane, and as (C) a disproportionation inhibitor that inhibit the disproportionation reaction of (A) a fluoroalkene, at least (C-1) difluoroiodomethane (CHF₂I or CF₂HI).

In the present disclosure, (C-2) n-propane may be contained in addition to (C-1) difluoroiodomethane as (C) a disproportionation inhibitor, and (C-1) 1,1,1-trifluoro-2-iodoethane (CF₃CH₂I) or (C-4) trifluoroiodomethane (CF₃I) may be contained in addition to (C-3) difluoroiodomethane as (C) a disproportionation inhibitor. The working medium for a refrigeration cycle according to the present disclosure may of course contain components other than components (A) to (C).

The high temperature and high pressure condition in the present disclosure refers to a condition that the working medium for a refrigeration cycle in which (A) a fluoroalkene is used in combination with (B) difluoromethane as the refrigerant component is exposed to a temperature of more than or equal to 60°C and a pressure of more than or equal to 4.2 MPa. The high temperature and high pressure condition is a condition in consideration of the temperature and pressure that a compressor included in a refrigeration cycle system such as an air conditioning device described later may actually have.

### [Refrigerant component]

In the working medium for a refrigeration cycle according to the present disclosure, at least two components of (A) a fluoroalkene that undergoes a disproportionation reaction and (B) difluoromethane (HFC32, R32, chemical formula: CH₂F₂) are used as the refrigerant component. Examples of (A) the fluoroalkene that undergoes a disproportionation reaction include 1,1,2-trifluoroethylene (HFO1123), trans-1,2-difluoroethylene (HFO1132(E)), and tetrafluoroethylene (CF₂=CF₂, HFO1114).

Of these fluoroalkenes, (A-1) 1,1,2-trifluoroethylene has a structure of Formula (2) shown below, in which two hydrogen atoms (H) bonded to the carbon atom (C [element symbol]) at the 1-position of ethylene are substituted with fluorine (F), and one of two hydrogen atoms bonded to the carbon atom at the 2-position is substituted with fluorine.

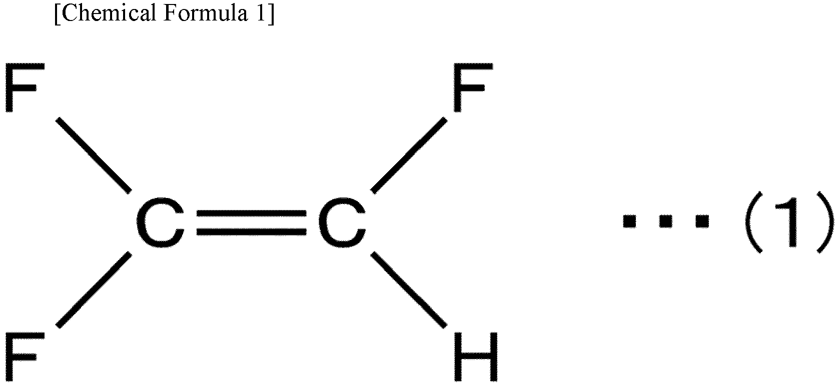

(A-1) 1,1,2-trifluoroethylene contains a carbon-carbon double bond. Atmospheric ozone generates hydroxyl radicals (OH radicals) by photochemical reaction, and double bonds are easily decomposed by the hydroxyl radicals. (A-1) 1,1,2-Trifluoroethylene therefore has little influence on ozone depletion and global warming.

Assuming that component (A) is a "main component (main refrigerant component)" of the refrigerant component in the refrigeration cycle working medium according to the present disclosure, (B) difluoromethane is regarded as a "subcomponent (sub-refrigerant component)" of the refrigerant component in the refrigeration cycle working medium according to the present disclosure. As described above, (B) difluoromethane has zero ozone depletion potential (ODP) and has good refrigerant performance as compared with hydrochlorofluorocarbons (HCFCs) that have been used so far.

The working medium for a refrigeration cycle according to the present disclosure may contain, as the refrigerant component, "another refrigerant component" other than components (A) and (B). Examples of another typical refrigerant component include, without particular limitations, hydrofluorocarbons (HFCs) such as difluoroethane, trifluoroethane, tetrafluoroethane, pentafluoroethane, pentafluoropropane, hexafluoropropane, heptafluoropropane, pentafluorobutane, and heptafluorocyclopentane; and hydrofluoroolefins (HFOs) such as monofluoropropene, trifluoropropene, tetrafluoropropene, pentafluoropropene, and hexafluorobutene.

Both of these HFCs and HFOs are known to have little influence on ozone depletion and global warming, and thus can be used in combination with component (A) as the refrigerant component. These other refrigerant components described above may be used singly or in appropriate combination of two or more refrigerant components.

Here, component (A) is also known to cause a rapid disproportionation reaction due to the good decomposition property described above. When (A-1) 1,1,2-trifluoroethylene is described as a typical example of component (A), in this disproportionation reaction, a self-decomposition reaction in which molecules of (A-1) 1,1,2-trifluoroethylene are decomposed occurs, and a polymerization reaction in which carbon generated by the decomposition is polymerized to become soot occurs following the decomposition reaction. When an active radical is generated by, for example, heat generation in a high temperature and high pressure state, this active radical reacts with (A-1) 1,1,2-trifluoroethylene to generate the disproportionation reaction described above. The disproportional reaction is accompanied by heat generation, this heat generation generates active radicals, and the active radicals further induce the disproportional reaction. In this manner, the generation of active radicals and the generation of the disproportionation reaction are chained to make the disproportionation reaction progress rapidly.

The applicants of the present application have extensively conducted studies before, and it has become clear that the active radicals that induce the disproportionation reaction of (A-1) 1,1,2-trifluoroethylene are mainly fluorine radical (F radical) and radicals such as trifluoromethyl radical (CF₃ radical) and difluoromethylene radical (CF₂ radical).

Accordingly, under the condition that (A) a fluoroalkene that undergoes a disproportionation reaction such as (A-1) 1,1,2-trifluoroethylene and (B) difluoromethane are used in combination, the applicants of the present application have attempted to inhibit or relax the rapid disproportionation reaction by adding, as a refrigerant component, a substance (disproportionation inhibitor) capable of efficiently capturing F radical, CF₃ radical, CF₂ radical, and the like to the working medium for a refrigeration cycle. As a result, the applicants of the present invention have found by their own that a suitable disproportionation inhibitor can be obtained by adding the disproportionation inhibitor disclosed in PTLs 1 to 5.

The inventors of the present invention have further intensively conducted studies, and it has become clear that there is a possibility that the working medium for a refrigeration cycle is exposed to a higher temperature and higher pressure condition (the above-described condition of more than or equal to 60°C and more than or equal to 4.2 MPa). As a result of still further intensive studies by the inventors of the present invention, they have found by their own that, under the condition of using (B) difluoromethane in combination with (A) a fluoroalkene that undergoes a disproportionation reaction, such as (A-1) 1,1,2-trifluoroethylene, it is possible to inhibit more favorably the disproportionation reaction of (A) a fluoroalkene by using at least (C-1) difluoroiodomethane (CHF₂I) as (C) a disproportionation inhibitor, even under a higher temperature and higher pressure condition than conventionally expected.

### [Disproportionation inhibitor]

In the working medium for a refrigeration cycle according to the present disclosure, at least (C-1) difluoroiodomethane (CHF₂I) is used as (C) a disproportionation inhibitor that inhibits the disproportionation reaction of (A) fluoroalkene such as (A-1) 1,1,2-trifluoroethylene described above.

In PTLs 1 to 5, examples of the halomethane as the disproportionation inhibitor include (mono)iodomethane (CH₃I), diiodomethane (CH₂I₂), dibromomethane (CH₂Br₂), bromomethane (CH₃Br), dichloromethane (CH₂Cl₂), chloroiodomethane (CH₂ClI), dibromochloromethane (CHBr₂Cl), methane tetraiodide (CI₄), carbon tetrabromide (CBr₄), bromotrichloromethane (CBrCl₃), dibromodichloromethane (CBr₂Cl₂), tribromofluoromethane (CBrsF), fluorodiiodomethane (CHFI₂), difluorodiiodomethane (CF₂I₂), dibromodifluoromethane (CBr₂F₂), and trifluoroiodomethane (CF₃I), but do not include difluoroiodomethane.

As apparent from the results of Examples described later, difluoroiodomethane can effectively inhibit or relax the disproportionation reaction of (A) a fluoroalkene such as (A-1) 1, 1,2 trifluoroethylene even when it is used singly.

Further, in the working medium for a refrigeration cycle according to the present disclosure, (C-2) n-propane can be used in combination with (C-1) difluoroiodomethane as (C) a disproportionation inhibitor. That is, in the working medium for a refrigeration cycle according to the present disclosure, (A) a fluoroalkene such as (A-1) 1,1,2-trifluoroethylene and (B) difluoromethane may be used in combination as the refrigerant component, and (C-1) difluoroiodomethane may be used alone as (C) a disproportionation inhibitor, or (A) a fluoroalkene such as (A-1) 1,1,2-trifluoroethylene and (B) difluoromethane may be used in combination as the refrigerant component, and (C-1) difluoroiodomethane and (C-2) n-propane may be used in combination as the disproportionation inhibitor.

Alternatively, in the working medium for a refrigeration cycle according to the present disclosure, (C-1) difluoroiodomethane and (C-3) 1,1,1-trifluoro-2-iodoethane (CF₃CH₂I) may be used in combination as (C) a disproportionation inhibitor, or (C-1) difluoroiodomethane and (C-4) trifluoroiodomethane (CF₃I) may be used in combination as (C) a disproportionation inhibitor.

Further, in the working medium for a refrigeration cycle according to the present disclosure, any two or more of (C-2) n-propane, (C-3) 1,1,1-trifluoro-2-iodoethane, and (C-4) trifluoroiodomethane may be used in combination with (C-1) difluoroiodomethane as (C) a disproportionation inhibitor. That is, when (C-1) difluoroiodomethane is used as a "main component of the disproportionation inhibitor", any one of (C-2) n-propane, (C-3) 1,1,1-trifluoro-2-iodoethane, and (C-4) trifluoroiodomethane may be used as a "subcomponent of the disproportionation inhibitor", two of these three "subcomponents of the disproportionation inhibitors" may be appropriately combined and used, or all three may be used as the "subcomponent of the disproportionation inhibitor".

### [Composition of working medium for refrigeration cycle]

Next, a typical composition of the working medium for a refrigeration cycle according to the present disclosure is specifically described. First, the content of (A) a fluoroalkene that undergoes a disproportionation reaction in the working medium for a refrigeration cycle is not limited to particular amounts, but when the total amount (referred to as "total amount of the refrigerant related components" for convenience of description) of the refrigerant component and the disproportionation inhibitor among the components constituting the working medium for a refrigeration cycle is 100 mass%, the lower limit value of the content of (A) a fluoroalkene such as (A-1) 1,1,2-trifluoroethylene is more than or equal to 40 mass%, may be more than or equal to 50 mass%, or may be more than or equal to 60 mass%.

When the content of (A) a fluoroalkene is less than 40 mass% of the total amount of the refrigerant related components, the content of (A) a fluoroalkene in the working medium for a refrigeration cycle becomes too small, and the working medium for a refrigeration cycle contains a large amount of other refrigerant components such as (B) difluoromethane. Consequently, in the working medium for a refrigeration cycle, the advantage of using (A) a fluoroalkene such as (A -1) 1,1,2-trifluoroethylene having a small global warming potential (GWP) cannot be sufficiently obtained.

On the other hand, the upper limit of the content of (A) a fluoroalkene is not limited to particular values and can be appropriately set according to the content of other essential components (that is, (B) difluoromethane and (C) a disproportionation inhibitor) in the working medium for a refrigeration cycle according to the present disclosure and the content of other components added in addition to the essential components.

Next, the content of (B) difluoromethane in the working medium for a refrigeration cycle is not limited to particular amounts either. As described above, (A) a fluoroalkene such as (A-1) 1,1,2-trifluoroethylene is a "main component (main refrigerant component)" of the refrigerant componenet, and (B) difluoromethane is a "subcomponent (sub-refrigerant component)" of the refrigerant component. The content of (A) a fluoroalkene such as (A-1) 1,1,2-trifluoroethylene is therefore larger than the content of (B) difluoromethane in the working medium for a refrigeration cycle according to the present disclosure.

It is noted that, in the working medium for a refrigeration cycle according to the present disclosure, it is important to make the GWP as small as possible. Specifically, the GWP is desirably less than or equal to 200 (GWP ≤ 200). From the viewpoint of using (A) a fluoroalkene such as (A-1) 1,1,2-trifluoroethylene and (B) difluoromethane in combination as the refrigerant component, the upper limit value of the content of (B) difluoromethane is less than or equal to 30 mass% and may be less than or equal to 25 mass% of the total amount of the refrigerant related components.

Next, the content of (C) a disproportionation inhibitor in the working medium for a refrigeration cycle is not limited to particular amounts, and the upper limit value of the content of (C) a disproportionation inhibitor is less than or equal to 15 mass%, may be less than or equal to 12 mass%, or may be less than or equal to 10 mass% of the total amount of the refrigerant related components. This is because when the content of the disproportionation inhibitor exceeds 15 mass% of the total amount of the refrigerant related components, the content of the disproportionation inhibitor becomes too large when viewed as a working medium for a refrigeration cycle, and there is a possibility that favorable physical properties cannot be exhibited as a "refrigerant". Of course, the disproportionation inhibitor may be added in an amount of more than or equal to 15 mass% of the total amount of the refrigerant related components depending on the composition of the working medium for a refrigeration cycle.

Thus, even when only (C-1) difluoroiodomethane, which is an essential component, is used as (C) a disproportionation inhibitor, the upper limit of the content thereof is less than or equal to 15 mass%, may be less than or equal to 12 mass%, or may be less than or equal to 10 mass% of the total amount of the refrigerant related components. However, under the high temperature and high pressure condition described above, the content of (C-1) difluoroiodomethane may be less than or equal to 10 mass%, may be less than or equal to 8 mass%, or may be less than or equal to 5 mass% of the total amount of the refrigerant related components. In particular, when the pressure condition is lower than the high temperature and high pressure conditions (less than 4.2 MPa), it is possible to effectively inhibit or relax the disproportionation reaction of (A) a fluoroalkene such as (A-1) 1,1,2-trifluoroethylene with the content of (C-1) difluoroiodomethane of less than or equal to 2 mass% of the total amount of the refrigerant related components.

Next, when at least one of (C-2) n-propane, (C-3) 1,1,1-trifluoro-2-iodoethane, and (C-4) trifluoroiodomethane is used in combination with (C-1) difluoroiodomethane as (C) a disproportionation inhibitor, the content thereof can be appropriately set according to the type of (C) a disproportionation inhibitor as the "subcomponent".

For example, (C-2) n-propane can be used as (C) a disproportionation inhibitor, and at the same time can be used as a refrigerant component other than (A) a fluoroalkene and (B) difluoromethane. Accordingly, the content of (C-2) n-propane can be appropriately adjusted according to the use conditions of the working medium for a refrigeration cycle and the like. Typically, the upper limit value of the content of (C-2) n-propane is less than or equal to 10 mass% and may be less than or equal to 8 mass% of the total amount of the refrigerant related components. The upper limit value of the content of (C-2) n-propane may be more than or equal to 4 mass% or may be more than or equal to 5 mass% of the total amount of the refrigerant related components.

When the content of (C-2) n-propane is more than 10 mass%, there is a possibility that the flammability of the working medium for a refrigeration cycle increases, and when viewed as (C) a disproportionation inhibitor, there is a tendency that the effect of inhibiting or relaxing the disproportionation reaction corresponding to the added amount is not obtained. When the content of (C-2) n-propane is less than 4 mass%, there is a possibility that the adjustment action by the addition of (C-2) n-propane, which also serves as (C) a disproportionation inhibitor and the refrigerant component, cannot be sufficiently exerted depending on various conditions.

The lower limit value of the content of (C) a disproportionation inhibitor is not limited to particular values either, and a typical lower limit thereof may be more than or equal to 1.2 mass% of the total amount of the refrigerant related components. Even when the amount of (C) a disproportionation inhibitor is less than 1.2 mass%, it is possible to obtain the effect of inhibiting or relaxing the disproportionation reaction, but when the amount of the disproportionation inhibitor is more than or equal to 1.2 mass%, it can be expected that the effect of inhibiting or relaxing the disproportionation reaction is more suitably realized. A preferable lower limit of the content of the disproportionation inhibitor may be therefore more than or equal to 1.2 mass% of the total amount of the refrigerant related components in the present disclosure.

In the working medium for a refrigeration cycle, impurities contained in the refrigerant component are usually less than or equal to 2 mass% to 3 mass% in many cases. For example, commercially available (A-1) 1,1,2-trifluoroethylene, which is a typical example of (A) a fluoroalkene that undergoes a disproportionation reaction, is known to have a purity of about 97 mass%, and as an impurity, a remainder of a synthetic raw material or a byproduct is contained in an amount of less than 3 mass%. In the present disclosure, (C-1) difluoroiodomethane, which is an essential component of (C) a disproportionation inhibitor, can effectively inhibit the disproportionation reaction or relax the progress of the disproportionation reaction even when added to 1,1,2-trifluoroethylene at an impurity level (less than or equal to 3 mass%). The addition amount of the disproportionation inhibitor is therefore not necessarily specified, and the upper limit value, the lower limit value, or the like of each component described above is a typical preferable example.

### [Other component usable in combination]

Since the working medium for a refrigeration cycle according to the present disclosure is used in a refrigeration cycle system, the working medium for a refrigeration cycle can be used in combination with a lubricating oil (refrigerator oil) for lubricating a compressor included in the refrigeration cycle system.

As described above, in the working medium for a refrigeration cycle according to the present disclosure, (A) a fluoroalkene that undergoes a disproportionation reaction such as (A-1) 1,1,2-trifluoroethylene and (B) difluoromethane may be used in combination as a refrigerant component, and at least (C-1) difluoroiodomethane may be used as (C) a disproportionation inhibitor. When the working medium for a refrigeration cycle is used in combination with a lubricating oil, it can be considered that a working medium-containing composition is composed of the refrigerant component, the disproportionation inhibitor, the lubricating oil component, and other components. In the working medium for a refrigeration cycle according to the present disclosure, (C) a disproportionation inhibitor may be mixed in the refrigerant component or in the lubricating oil component.

As the lubricating oil component that is contained in the working medium for a refrigeration cycle (used in combination with the working medium for a refrigeration cycle), various lubricating oils known in the refrigeration cycle system are suitably used. Specific examples of the lubricating oil include, without particular limitations, an ester-based lubricating oil, an ether-based lubricating oil, a glycol-based lubricating oil, an alkylbenzene-based lubricating oil, a fluorine-based lubricating oil, a mineral oil, and a hydrocarbon-based synthetic oil. These lubricating oils may be used singly or in appropriate combination of two or more lubricating oils.

Further, various known additive agents other than the disproportionation inhibitor may be added to the working medium-containing composition. Specific examples of the additive agent include, without particular limitations, an antioxidant, a moisture scavenger, a metal inactivator, an anti-wear agent, and a defoamer. The antioxidant is used for improving, for example, heat stability, oxidation resistance, and chemical stability of the refrigerant components or the lubricating oil. The moisture scavenger removes moisture penetrated the refrigeration cycle system and is particularly used for inhibiting the properties of the lubricating oil from changing. The metal inactivator is used for inhibiting or preventing a chemical reaction caused by a catalyst action of a metal component. The anti-wear agent is used for reducing wear at a slide portion in the compressor, in particular, wear during operation in a high pressure state. The defoamer is particularly used for inhibiting generation of air bubbles in the lubricating oil.

Specific types of these additive agents are not limited to particular types, and known compounds and the like can be suitably used according to various conditions. One type of the compound or the like may be used singly, or two or more types of compounds and the like can be used in appropriate combination as these additive agents. The addition amount of these additive agents is not limited to particular amounts either, and these additive agents can be added within a known range as long as the properties of the working medium for a refrigeration cycle according to the present disclosure or the working medium-containing composition containing the working medium are not impaired.

The working medium for a refrigeration cycle according to the present disclosure does not have to contain other components. For example, when (A-1) 1,1,2-trifluoroethylene is used as (A) a fluoroalkene that undergoes a disproportionation reaction, the working medium for a refrigeration cycle according to the present disclosure may be composed of three components of (A -1) 1,1,2-trifluoroethylene, (B) difluoromethane, and (C-1) difluoroiodomethane, may be composed of four components of (A-1) 1,1,2-trifluoroethylene, (B) difluoromethane, (C-1) difluoroiodomethane, and (C-2) n-propane, may be composed of four components of (A-1) 1,1,2-trifluoroethylene, (B) difluoromethane, (C-1) difluoroiodomethane, and (C-3) 1,1,1-trifluoro-2-iodoethane, may be composed of four components of (A-1) 1,1,2-trifluoroethylene, (B) difluoromethane, (C-1) difluoroiodomethane, and (C-4) trifluoroiodomethane, or may be composed of five or six components of (A-1) 1,1,2-trifluoroethylene, (B) difluoromethane, and (C-1) difluoroiodomethane, and at least any two of (C-2) n-propane, (C-3) 1,1,1-trifluoro-2-iodoethane, and (C-4) trifluoroiodomethane. When (A) a fluoroalkene is a refrigerant component different from (A-1) 1,1,2 trifluoroethylene, (A-1) 1,1,2 trifluoroethylene may be replaced with another refrigerant component.

### [Configuration example of refrigeration cycle system]

Next, one example of a refrigeration cycle system configured to include the working medium for a refrigeration cycle according to the present disclosure is described with reference to Figs. 1A and 1B.

A specific configuration of the refrigeration cycle system according to the present disclosure is not limited to particular configurations, and the refrigeration cycle system only needs to be configured to include constituent elements such as a compressor, a condenser, an expander, and an evaporator connected to each other with a pipe. A specific application example of the refrigeration cycle system according to the present disclosure is not limited to particular applications either. Examples of the application include an air conditioning device (air conditioner), a refrigerator (for home use or professional use), a dehumidifier, a showcase, an ice machine, a heat pump water heater, a heat pump washing and drying machine, and a vending machine.

An air conditioning device is described as a typical application example of the refrigeration cycle system according to the present disclosure. Specifically, as schematically illustrated in the block diagram of Fig. 1A, air conditioning device 10 according to the present exemplary embodiment includes indoor unit 11, outdoor unit 12, and pipe 13 connecting these units. Indoor unit 11 includes heat exchanger 14. Outdoor unit 12 includes heat exchanger 15, compressor 16, and decompressor 17.

Heat exchanger 14 of indoor unit 11 and heat exchanger 15 of outdoor unit 12 are circularly connected to each other with pipe 13 to thus form a refrigeration cycle. Specifically, heat exchanger 14 of indoor unit 11, compressor 16, heat exchanger 15 of outdoor unit 12, and decompressor 17 are circularly connected to each other in this order with pipe 13. Pipe 13 that connects heat exchanger 14, compressor 16, and heat exchanger 15 is provided with four-way valve 18 for switching between cooling and heating. Indoor unit 11 includes, a blast fan, a temperature sensor, an operation unit, and the like that are not illustrated in the drawing, and outdoor unit 12 includes an air blower, an accumulator, and the like that are not illustrated in the drawing. Pipe 13 is further provided with various valve devices other than four-way valve 18, a strainer, and the like that are not illustrated in the drawing.

Heat exchanger 14 included in indoor unit 11 exchanges heat between the indoor air taken into indoor unit 11 by the blast fan and the refrigerant flowing inside heat exchanger 14. Indoor unit 11 blows the air warmed through the heat exchange into a room during heating and blows the air cooled through the heat exchange into a room during cooling. Heat exchanger 15 included in outdoor unit 12 exchanges heat between the external air taken into outdoor unit 12 by the air blower and the refrigerant flowing inside heat exchanger 15.

Specific configurations of indoor unit 11 and outdoor unit 12, or specific configurations of heat exchanger 14 or heat exchanger 15, compressor 16, decompressor 17, four-way valve 18, the blast fan, the temperature sensor, the operation unit, the air blower, the accumulator, other valve devices, the strainer, and the like are not limited to particular configurations, and known configurations can be suitably used.

One example of operation of air conditioning device 10 illustrated in Fig. 1A is specifically described. First, in cooling operation or dehumidifying operation, compressor 16 of outdoor unit 12 compresses a gas refrigerant and discharges the compressed gas refrigerant, which is sent out to heat exchanger 15 of outdoor unit 12 through four-way valve 18. Heat exchanger 15 performs heat exchange between external air and the gas refrigerant, and thus the gas refrigerant is condensed and liquefied. The liquefied liquid refrigerant is decompressed by decompressor 17 and sent out to heat exchanger 14 of indoor unit 11. In heat exchanger 14, the liquid refrigerant evaporates to become a gas refrigerant by exchanging heat with the indoor air. This gas refrigerant returns to compressor 16 of outdoor unit 12 via four-way valve 18. Compressor 16 compresses the gas refrigerant and discharges the compressed gas refrigerant to heat exchanger 15 again via four-way valve 18.

In heating operation, compressor 16 of outdoor unit 12 compresses a gas refrigerant and discharges the compressed gas refrigerant, which is sent out to heat exchanger 14 of indoor unit 11 through four-way valve 18. In heat exchanger 14, the gas refrigerant is condensed and liquefied through heat exchange with indoor air. The liquefied liquid refrigerant is decompressed by decompressor 17 to become a gas-liquid two-phase refrigerant and sent out to heat exchanger 15 of outdoor unit 12. Heat exchanger 15 exchanges heat between the external air and the gas-liquid two-phase refrigerant, and thus the gas-liquid two-phase refrigerant evaporates to become gas refrigerant and returns to compressor 16. Compressor 16 compresses the gas refrigerant and discharges the compressed gas refrigerant to heat exchanger 14 of indoor unit 11 again via four-way valve 18.

Further, a refrigerator is described as another typical application example of the refrigeration cycle system according to the present disclosure. Specifically, as schematically illustrated in a block diagram of Fig. 1B, for example, refrigerator 20 according to the present exemplary embodiment includes compressor 21, condenser 22, decompressor 23, evaporator 24, pipe 25, and the like illustrated in Fig. 1B. Refrigerator 20 also includes a housing as a main body, an air blower, an operation unit, a controller, and the like that are not illustrated in the drawing.

Compressor 21 compresses a refrigerant gas into a high temperature and high pressure gas refrigerant. Condenser 22 cools and liquefies the refrigerant. Decompressor 23 is composed of, for example, a capillary tube, and decompresses the liquefied refrigerant (liquid refrigerant). Evaporator 24 evaporates the refrigerant to form a low temperature and low pressure gas refrigerant. Compressor 21, condenser 22, decompressor 23, and evaporator 24 are circularly connected to each other in this order with pipe 25 for flowing the refrigerant gas, and this configuration forms a refrigeration cycle.

The configurations of compressor 21, condenser 22, decompressor 23, evaporator 24, pipe 25, the main body housing, the air blower, the operation unit, the controller, and the like are not limited to particular configurations, and known configurations can be suitably used. Refrigerator 20 may have a known configuration other than these configurations.

One example of operation of refrigerator 20 illustrated in Fig. 1B is specifically described. Compressor 21 compresses a gas refrigerant and discharges the compressed gas refrigerant to condenser 22. Condenser 22 cools the gas refrigerant to form a liquid refrigerant. The liquid refrigerant is decompressed by passing through decompressor 23 and sent to evaporator 24. In evaporator 24, the liquid refrigerant draws heat from the surroundings and is gasified to be a gas refrigerant, then returns to compressor 21. Compressor 21 compresses the gas refrigerant and discharges the compressed gas refrigerant to condenser 22 again.

These air conditioning device 10 and refrigerator 20 are refrigeration cycle systems configured to include the working medium for a refrigeration cycle described above. 1,1,2-Trifluoroethylene used for the working medium for a refrigeration cycle has favorable properties as a refrigerant component and has small ODP and GWP. It is therefore possible to achieve an efficient refrigeration cycle system while reducing the influence on the environment.

Moreover, in the working medium for a refrigeration cycle according to the present disclosure, (A) a fluoroalkene that undergoes a disproportionation reaction such as (A -1) 1,1,2-trifluoroethylene and (B) difluoromethane are used as a refrigerant component, and at least (C-1) difluoroiodomethane is used as (C) a disproportionation inhibitor. Preferably, (C-1) n-propane and (C-2) difluoroiodomethane may be used in combination, (C-1) 1,1,1-trifluoro-2-iodoethane and (C-3) difluoroiodomethane may be used in combination, or (C-1) trifluoroiodomethane and (C-4) difluoroiodomethane may be used in combination as the disproportionation inhibitor.

Such a configuration of the working medium for a refrigeration cycle can avoid, inhibit, or relax occurrence of a chain disproportionation reaction of 1,1,2-trifluoroethylene even when heat generation or the like occurs during operation of the refrigeration cycle. In particular, it is possible to avoid, inhibit, or relax the occurrence of the disproportionation reaction of 1,1,2-trifluoroethylene under a high temperature and high pressure condition (a condition of more than or equal to 60°C and more than or equal to 4.2 MPa) in which an actual use environment of the working medium for a refrigeration cycle is assumed. As a result, generation of soot and the like due to the chain disproportionation reaction can be effectively avoided, and therefore it is possible to improve the reliability of the working medium for a refrigeration cycle and a refrigeration cycle system including the working medium.

### EXAMPLES

Hereinafter, the present disclosure is described more specifically with reference to Examples, Comparative Examples, and Reference Examples. However, the present disclosure is not limited to the examples below. Those skilled in the art can make various changes, corrections, and modifications without departing from the scope of the present disclosure.

### (Experimental system for disproportionation reaction)

To a sealed-type pressure resistant container (stainless steel sealed container TVS-N2 [product name] manufactured by Taiatsu Techno Corporation, internal volume: 50 mL), a pressure sensor (VESVM10-2m [product name] manufactured by Valcom Co., Ltd.) for measuring the internal pressure in the pressure resistant container, a thermocouple (PL thermocouple ground PL-18K-A4-T [product name] manufactured by Conax Technologies) for measuring the internal temperature in the pressure resistant container, and an electrical discharge device (UH-1 series mini mini welder [product name] manufactured by AS ONE Corporation) for generating discharge in the pressure resistant container were attached.

Further, a gas cylinder of (A-1) 1,1,2-trifluoroethylene (manufactured by SynQuest Laboratories, sold by Hydrus Chemical Inc., containing 5% of limonene (liquid phase) as a stabilizer) as (A) a fluoroalkene that undergoes a disproportionation reaction, which is a main component of the refrigerant component, and a gas cylinder of (B) difluoromethane (manufactured by DAIKIN INDUSTRIES, LTD.), which is a subcomponent of the refrigerant component, were connected such that the pressures can be adjusted. Then, two mantle heaters (pipe type mantle heaters P-31 type and P-51 type [product names] manufactured by Tokyo Garasu Kikai Co., Ltd.) were installed to heat the entire pressure resistant container, and a ribbon heater (flexible ribbon heater 1 m, 200 W manufactured by Tokyo Technological Labo) was installed so that the pipe part was also able to be heated. An experimental system for a disproportionation reaction was thus constructed.

### (Comparative Example 1)

In the experimental system, (A-1) 1,1,2-trifluoroethylene and (B) difluoromethane were introduced from the gas cylinders into the pressure resistant container, and the introduction amounts were adjusted such that the content of (B) difluoromethane was 22 mass%.

Thus, the content of (A-1) 1,1,2 trifluoroethylene was 78 mass% in the working medium for a refrigeration cycle in the pressure resistant container.

To induce a disproportionation reaction of (A-1) 1,1,2 trifluoroethylene, discharge was generated at a discharge voltage of 300 V by the electrical discharge device under a high temperature and high pressure condition of an internal temperature of 150°C and an internal pressure of 6 MPa. Thereafter, the inside of the pressure resistant container was checked after the internal pressure and the internal temperature were sufficiently lowered, and generation of a considerable amount of soot was confirmed, which means the disproportionation reaction occurred.

### (Comparative Example 2)

(A-1) 1,1,2-trifluoroethylene and (B) difluoromethane were introduced into a pressure resistant container in the same manner as in Comparative Example 1 except that 1,1,1-trifluoro-2-iodoethane was added as (C) a disproportionation inhibitor to have a content of 7.5 mass% in the experimental system.

Thus, the content of (A-1) 1,1,2-trifluoroethylene was 71.5 mass%, the content of (B) difluoromethane was 22 mass%, and the content of 1,1,1-trifluoro-2-iodoethane was 7.5 mass% in the working medium for a refrigeration cycle in the pressure resistant container.

Then, occurrence of the disproportionation reaction of (A-1) 1,1,2-trifluoroethylene was checked in the same manner as in Comparative Example 1, and generation of a considerable amount of soot was confirmed similarly to Comparative Example 1, which means the disproportionation reaction occurred.

### (Example 1)

(A-1) 1,1,2-trifluoroethylene and (B) difluoromethane were introduced into a pressure resistant container in the same manner as in Comparative Example 1 except that (C-1) difluoroiodomethane was added as (C) a disproportionation inhibitor to have a content of 7.5 mass% in the experimental system.

Thus, the content of (A-1) 1,1,2-trifluoroethylene was 71.5 mass%, the content of (B) difluoromethane was 22 mass%, and the content of (C-1) difluoroiodomethane was 7.5 mass% in the working medium for a refrigeration cycle in the pressure resistant container.

Then, occurrence of the disproportionation reaction of (A-1) 1,1,2 trifluoroethylene was checked in the same manner as in Comparative Example 1, but occurrence of the disproportionation reaction was not confirmed.

### (Example 2)

(A-1) 1,1,2-trifluoroethylene and (B) difluoromethane were introduced into the pressure resistant container in the same manner as in Comparative Example 1 except that (C-1) difluoroiodomethane was added as (C) a disproportionation inhibitor to have a content of 1 mass%, a gas cylinder of (C-2) n-propane was connected to the pressure resistant container such that the pressure was able to be adjusted, and the introduction amount was adjusted such that the content of (C-2) n-propane was 7.5 mass% in the experimental system.

Thus, the content of (A-1) 1,1,2-trifluoroethylene was 69.5 mass%, the content of (B) difluoromethane was 22 mass%, the content of (C-1) difluoroiodomethane was 1.0 mass%, and the content of (C-2) n-propane was 7.5 mass% in the working medium for a refrigeration cycle in the pressure resistant container.

Then, occurrence of the disproportionation reaction of (A-1) 1,1,2 trifluoroethylene was checked in the same manner as in Comparative Example 1, but occurrence of the disproportionation reaction was not confirmed.

The present invention is not limited to the description of the embodiment described above, and various modifications can be made within the scope of claims, and an exemplary embodiment obtained by appropriately combining technical means disclosed in each of different exemplary embodiments and a plurality of modifications is also included in the technical scope of the present invention.

It is apparent from the foregoing description that those skilled in the art will conceive various modifications and other exemplary embodiments on the present invention. Thus, the descriptions are to be construed only as examples, and are provided for the purpose of teaching those skilled in the art the best mode of carrying out the present invention. It is therefore possible to substantially change the details of the structure and function of the present disclosure without departing from the spirit of the present invention.

### INDUSTRIAL APPLICABILITY

The present invention can be suitably used in the field of a working medium used for a refrigeration cycle and can be widely and suitably used in the field of a refrigeration cycle system such as an air conditioning device (air conditioner), a refrigerator (for home or professional use), a dehumidifier, a showcase, an ice machine, a heat pump water heater, a heat pump washing and drying machine, or a vending machine.

### REFERENCE MARKS IN THE DRAWINGS

- 10: air conditioning device (refrigeration cycle system)
- 11: indoor unit
- 12: outdoor unit
- 13: pipe
- 14: heat exchanger
- 15: heat exchanger
- 16: compressor
- 17: decompressor
- 18: four-way valve
- 20: refrigerator (refrigeration cycle system)
- 21: compressor
- 22: condenser
- 23: decompressor
- 24: evaporator
- 25: pipe

## Claims

1. A working medium for a refrigeration cycle, the working medium comprising:
a refrigerant component including a fluoroalkene that undergoes a disproportionation reaction and difluoromethane; and
a disproportionation inhibitor that inhibits the disproportionation reaction of the fluoroalkene, the disproportionation inhibitor including at least difluoroiodomethane (CHF₂I).

2. The working medium for a refrigeration cycle according to Claim 1, wherein
the fluoroalkene that undergoes the disproportionation reaction is 1,1,2-trifluoroethylene.

3. The working medium for a refrigeration cycle according to Claim 1 or 2, the working medium further comprising n-propane as the disproportionation inhibitor.

4. The working medium for a refrigeration cycle according to any one of Claims 1 to 3, the working medium further comprising 1,1,1-trifluoro-2-iodoethane (CF₃CH₂I) or trifluoroiodomethane (CF₃I) as the disproportionation inhibitor.

5. The working medium for a refrigeration cycle according to any one of Claims 1 to 4, wherein
a content of the difluoromethane in a total amount of the refrigerant component and the disproportionation inhibitor is less than or equal to 30 mass%.

6. The working medium for a refrigeration cycle according to any one of Claims 1 to 5, wherein
a content of the difluoroiodomethane in a total amount of the refrigerant component and the disproportionation inhibitor is less than or equal to 15 mass% when the total amount is 100 mass%.

7. The working medium for a refrigeration cycle according to Claim 3, wherein
a content of the n-propane in a total amount of the refrigerant component and the disproportionation inhibitor is less than or equal to 10 mass% when the total amount is 100 mass%.

8. A refrigeration cycle system comprising the working medium for a refrigeration cycle according to any one of Claims 1 to 7.
